# EUROPÄISCHE PATENTSCHRIFT

(11) **EP 1 068 111 B1**
(45) Veröffentlichungstag und Bekanntmachung des Hinweises auf die Patenterteilung: **13.04.2005**
(21) Anmeldenummer: 99960893.8
(22) Anmeldetag: 11.11.1999
(51) Int. Cl.: B60S 1/04, B29C 45/14

(54) **ROHRPLATINE SOWIE VERFAHREN ZUR HERSTELLUNG EINER SOLCHEN**
TUBULAR PLATE AND CORRESPONDING PRODUCTION METHOD
PLATINE TUBULAIRE ET SON PROCEDE DE FABRICATION

(30) Priorität: 03.02.1999 DE 19904155
(43) Veröffentlichungstag der Anmeldung: 17.01.2001
(73) Patentinhaber: ROBERT BOSCH GMBH, 70442 Stuttgart (DE)
(72) Erfinder: RACHUI, Dirk, D-99817 Eisenach (DE); BOOS, Tino, D-76532 Baden-Baden (DE); BODENDORF, Georg, D-98599 Brotterode (DE); BISCHOF, Rolf, D-99891 Fischbach (DE)
(86) Internationale Anmeldenummer: PCT/DE1999/003590
(87) Internationale Veröffentlichungsnummer: WO 2000/046081

(56) Entgegenhaltungen:
- EP-A- 0 690 242
- EP-A- 0 704 356
- EP-A- 0 704 357
- US-A- 3 762 453

## Beschreibung

Die Erfindung betrifft eine Rohrplatine, insbesondere einer Scheibenwischanlage von Kraftfahrzeugen, gemäß der Gattung der unabhängigen Ansprüche.

### Stand der Technik

Rohrplatinen für Scheibenwischanlagen von Kraftfahrzeugen sind bekannt. Diese umfassen im allgemeinen eine auch als Blechplatine bezeichnete Haltevorrichtung, die aus einem als Rohr ausgeführten Halteelement mit aufgeschweißtem Motorhalter aufgebaut ist. Der Motorhalter dient der Aufnahme und Befestigung des für den Antrieb der Wischanlage nötigen Motors. Die Rohrplatine ist ortsfest an der Karrosserie des Fahrzeuges befestigt und trägt an seinen beiden freien Enden Lager zur Aufnahme von jeweils einer Wischerwelle, an der der Wischerarm mit Wischerblatt befestigt ist.

Aus der gattungsbildenden DE 196 39 559 Al ist eine Rohrplatine bekannt, die wenigstens an einem seiner beiden freien Enden ein Lager zur Aufnahme einer Wischerwelle aufweist, wobei das Lager auf mindestens ein freies Ende der Rohrplatine mittels Spritzgußtechnik aufgebracht, insbesondere aufgespritzt ist.

Dabei wird das Ende des Platinenrohrs, auf das das Lager aufgespritzt wird, durch zusammendrücken verschlossen. Dadurch wird vermieden, daß Spritzgut während des Spritzvorgangs ins Rohrinnere gelangt. Als nachteilig erweist sich hier, daß während des Spritzvorganges das Platinenrohr dem hohen Spritzdruck ausgesetzt, und dadurch in der Form während des Spritzgießens verformt wird, wobei die Verformung elastische und plastische Anteile hat. Die Verformungen fallen immer wieder unterschiedlich aus, so daß damit einhergehende Änderungen des Rohraußenvolumens nicht vorhersehbar sind. Als nachteilig erweist sich in diesem Zusammenhang, daß damit das auszuspritzende Volumen sehr unterschiedlich ist und bei konstanten Füllungen damit einghergehende unterschiedliche Formfüllungen die Maßhaltigkeit des Lagers und der Befestigung am Platinenrohr beeinträchtigen.

Aus der EP-A-0704356 ist eine Rohrplatine einer Scheibenwischanlage eines Kraftfahrzeugs bekannt, die ein Platinenrohr mit einem Hohlprofil aufweist, das an seinem freien Ende durch einen Bolzen verschlossen ist. Auf einen aus dem Platinenrohr herausragenden Abschnitt des Bolzens ist ein Wischerlager aus Kunststoff aufgespritzt.

Aus der EP-A-0690242 ist ein Gelenkhebel mit Kugelschalenlager bekannt, bei dem ein Dichtstopfen in das Innere des Trägers eingeschoben wird und anschließend durch einquetschen im Bereich des freien Endes des Trägerrohr arretiert wird. Am freien Ende ist das Kugelschalenlager aus Kunststoff aufgespritzt.

### Vorteile der Erfindung

Die erfindungsgemäße Rohrplatine mit den Merkmalen des Anspruchs 1 hat den Vorteil, daß das Platinenrohr von innen durch den Dichtstopfen gestützt wird, wodurch der Widerstand gegen das Zusammendrücken des Platinenrohres während des Spritzgußprozesses erhöht wird. In der Folge verringert sich der Durchmesser des Platinenrohrs während des Spritzvorgangs nur noch unwesentlich, wodurch die einzuspritzende Füllmenge gut auf das zu füllende Volumen abgestimmt werden kann und somit eine gute Maßhaltigkeit des Lagers gesichert ist. Die Erfindung sieht in vorteilhafter Weise vor, daß das Ende des Platinenrohrs, auf das das Lager aufgespritzt wird, durch den Dichtstopfen verschlossen ist. Dadurch wird zunächst vermieden, daß Spritzgut ins Rohrinnere gelangt. Ferner sieht die Erfindung vor, daß das Ende des Platinenrohrs, auf das das Lager aufgespritzt werden soll, in Kombination mit dem Dichtstopfen so ausgebildet ist, daß ein Verschieben,

Abziehen oder Verdrehen des Lagers auf bzw. von dem Platinenrohr nicht möglich ist. Die Erfindung sieht demgemäß nach einer ersten Variante vor, ein freies Ende des Platinenrohrs, an das ein Lager angespritzt werden soll, geeignet zu lochen. Der in das stirnseitig offene Ende des Platinenrohrs eingeschobene Dichtstopfen hat in dem Bereich seines Umfangs Ausnehmungen, an dem eine oder mehrere Lochungen des Platinenrohrs gegenüberliegen. Dabei sind das mindestens eine Loch des Platinenrohrs und die Ausnehmung im Dichtstopfen so einander zu geordnet und von der Größe her ausgelegt, daß die Lochränder zumindest teilweise über die Ausnehmungen überstehen und somit Hinterschneidungen innerhalb des Platinenrohrs gebildet werden. Spritzgußmasse fließt während des Spritzgießens in diese Hinterschneidungen hinein, wodurch eine sichere formschlüssige Verbindung zwischen Platinenrohr und Lager entsteht.

Nach einer weiteren vorteilhaften Ausgestaltung der Erfindung, befindet sich der ebenfalls mit an einem bestimmten Oberflächenabschnitt mit Ausnehmungen versehene Dichtstopfen an dem Ende des Platinenrohrs, an das das Lager angespritzt ist. Das Rohr ist dabei so eingedrückt, daß die Oberfläche des Rohrs an den Ausnehmungen des Dichtstopfens zumindest teilweise anliegt. Die Verbindung zwischen Dichtstopfen und Platinenrohr ist dadurch formschlüssig. Das um dieses eingedrückte Platinenrohrende angespritzte Lager erhält bei geeigneter Formgebung der Eindrückungen des Rohrs so einen verdreh- und abziehsicheren Sitz auf dem Platinenrohrende.

Der Dichtstopfen ist erfindungsgemäß an seiner an der Innenseite des Platinenrohrs anliegenden Oberfläche so gestaltet, daß er das Rohrinnere gegenüber eindringender Spritzgußmasse abdichtet. Weiterhin stützt der Dichtstopfen das Rohrinnere gegen den Spritzdruck so ab, daß keine unzulässigen Verformungen auftreten.

Um die Abstützung des Platinenrohrs gegenüber dem Spritzdruck erfindungsgemäß vornehmen zu können, ist die Länge des Dichtstopfens im Platinenrohr mindestens so lang wie die Länge des Ansatzes des Lagers am Platinenrohr.

Weitere vorteilhafte Ausgestaltungen der Erfindung sind den Unteransprüchen zu entnehmen.

Das Verfahren zur Herstellung der erfindungsgemäßen Rohrplatine ist dadurch gekennzeichnet, daß das mindestens eine freie Ende des Platinenrohrs durch den Dichtstopfen geschlossen, anschließend in eine Gußform eingelegt und nach dem Schließen der Gußform durch die Spritzgußmasse umspritzt und so das Lager geformt wird

Weitere vorteilhafte Verfahrensschritte zur Herstellung der erfindungsgemäßen Rohrplatine sind den abhängigen Unteransprüchen zum Verfahren zu entnehmen.

### Zeichnungen

Die Erfindung wird anhand der Ausführungsbeispiele mit Bezug auf die Zeichnungen näher erläutert. Dabei zeigen:
Figur 1 eine erfindungsgemäße Rohrplatine einer Scheibenwischanlage von Kraftfahrzeugen,
Figur 2 einen Längsschnitt durch ein Ende eines Platinenrohrs gemäß eines ersten Ausführungsbeispiels,
Figur 3 einen Längsschnitt durch das Ende eines Platinenrohrs eines weiteren Ausführungsbeispieles.

### Beschreibung der Ausführungsbeispiele

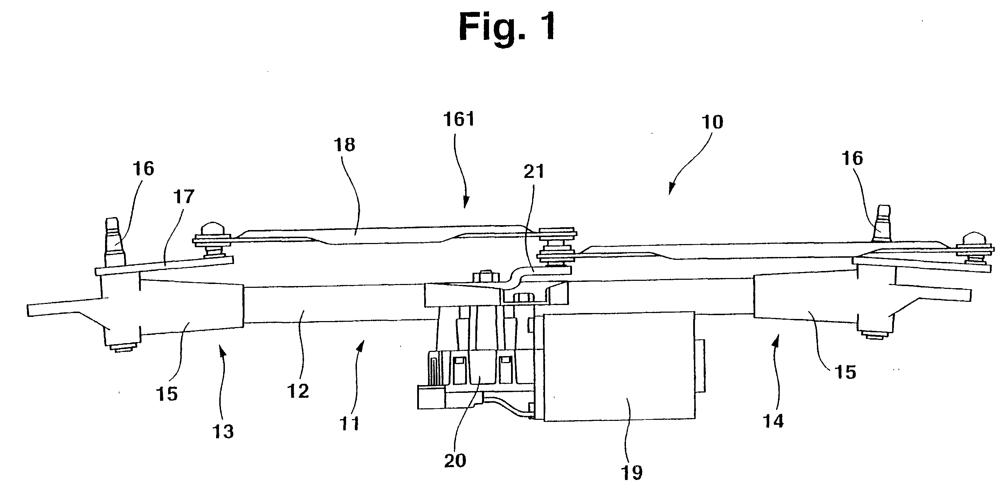

Die Figur 1 zeigt eine Antriebsvorrichtung 10 für Scheibenwischer an Kraftfahrzeugen. Die Antriebsvorrichtung weist eine Rohrplatine 11 auf, die ortsfest in einem Kraftfahrzeug angeordnet werden kann. Teil der Rohrplatine 11 ist ein Platinenrohr 12, das an seinen beiden Enden 13 und 14 jeweils mit einem Lager 15 für eine Wischerwelle 16 versehen ist. Die im wesentlichen aus Kunststoff bestehenden Lager 15 sind auf die freien Enden 13 und 14 des Platinenrohrs 12 mittels Spritzgußtechnik aufgespritzt. Die Wischerwelle 16 ist drehbeweglich, jedoch axial festgelegt angeordnet. Sie ragt beidseitig über das Lager 15 hinaus, wobei an dem einen Ende der Wischerwelle 16 ein Kupplungsgestänge 161 angreift. Das Kupplungsgestänge 161 umfaßt eine erste Kupplungsstange 17 und eine zweite Kupplungsstange 18, die drehbeweglich miteinander verbunden sind. Die Kupplungsstange 17 ist drehfest mit der Wischerwelle 16 verbunden. Ferner weist die Antriebsvorrichtung 10 einen Antriebsmotor 19 auf, der über ein Getriebe 20 eine Kurbel 21 antreibt. Die Kurbel 21 ist mit den Kupplungsstangen 17 verbunden.

Auf das aus dem Lager 15 vorstehende Ende der Wischerwelle 16 ist ein ein Wischerblatt aufweisender Wischerarm befestigbar.

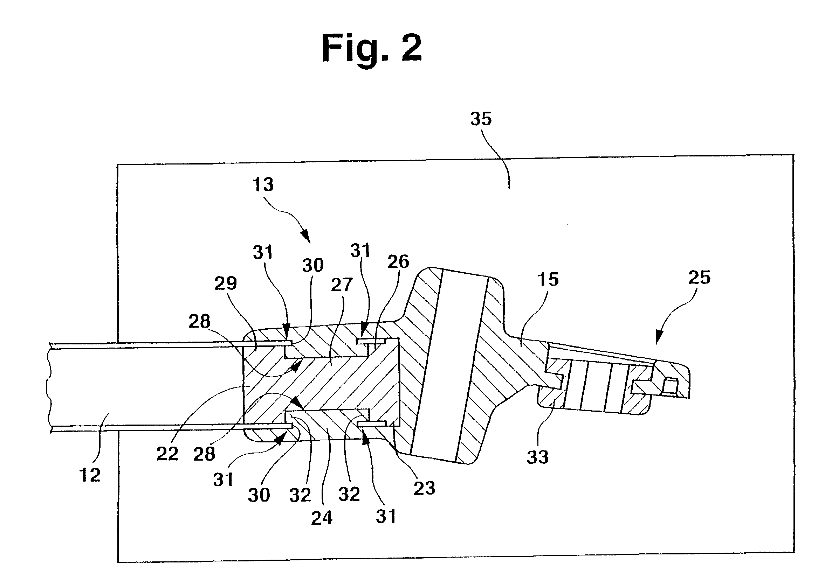

Die Figur 2 stellt einen Längsschnitt durch das freie Ende 13 des Platinenrohrs 12 dar, das Teil der Rohrplatine 11 ist. Der Figur 2 ist zu entnehmen, daß ein Dichtstopfen 22 mit einem Bund 23 in einer stirnseitigen Öffnung des Platinenrohrs eingeschoben ist und dort mit seinem Bund 23 dichtend anliegt. Um dieses freie Ende 13 des Platinenrohrs 12 ist das Lager 15 angespritzt und wird durch einen in etwa rohrförmigen Ansatz 24 mit dem Platinenrohr 12 verbunden. Mit dem Lager 15 einstückig verbunden ist ein Lagerauge 25, über das sich das Lager 15 zusätzlich an der Fahrzeugkarosserie abstützt und daran anschraubbar ist.

Dem Bund 23 des Dichtstopfens 22 folgt ein erster Abschnitt 26, der einer Innenkontur des Platinenrohrs 12 entspricht und gegen diese Innenkontur dichtend anliegt. Diesem ersten Abschnitt 26 des Dichtstopfens 22 folgt ein zweiter Abschnitt 27, dessen Querschnittsfläche gegenüber der Querschnittsfläche des ersten Abschnitts 26 durch eine oder mehrere vom Umfang her ausgenommene Ausnehmungen 28 verkleinert ist. Ein Beispiel für eine geeignete Form der Ausnehmung ist eine Ringnutform. Dem zweiten Abschnitt 27 des Dichtstopfens 22 folgt ein dritter Abschnitt 26, der wie bereits der erste Abschnitt 26 der Innenkontur des Platinenrohrs 12 entspricht und gegen diese dichtend anliegt. Zweck der Dichtflächen zwischen Dichtstopfen 22 und Platinenrohr 12 ist, die Gußmasse während des Spritzgießvorgangs nur in die geeigneten Bereiche einfließen zu lassen. Insbesondere gilt dies für die Dichtung des dritten Abschnitts 29, die ein Einströmen der Gußmasse in den dahinter liegenden Bereich des Platinenrohrs 12 verhindert.

Wie aus Figur 2 ersichtlich, ist das Platinenrohr 12 im Bereich des Dichtstopfens 22 an mindestens einer Stelle mit einem Loch 30 versehen. Die im Bild gezeigten Löcher 30 sind dabei im Bereich des zweiten Abschnitts 27 des Dichtstopfens 22 angeordnet. Eine weitere Eigenschaft der Löcher 30 ist, daß die lichte axiale Weite der Löcher 30 kleiner ist als die der nutförmigen Ausnehmungen 28. Liegen unter den genannten Bedingungen die eine oder mehrere Ausnehmungen 28 direkt unterhalb eines oder mehrerer Löcher 30, so ergeben sich mindestens Teilbereiche des jeweiligen Lochrands 31, die über die Ausnehmungen 28 ragen und so Hinterschneidungen 32 bilden. Die sich in diesen Hinterschneidungen 32 befindende und verfestigte Spritzgußmasse bildet somit ein Befestigungselement.

Im mit dem Lager 15 einstückig verbundenen Lagerauge 25 befindet sich ein Dämpfungselement 33, das vom Lagerauge 25 formschlüssig aufgenommen ist. Wie in Figur 2 dargestellt, ist das Dämpfungselement 33 zur Aufnahme eines Befestigungselementes in das Lagerauge 25 eingespritzt.

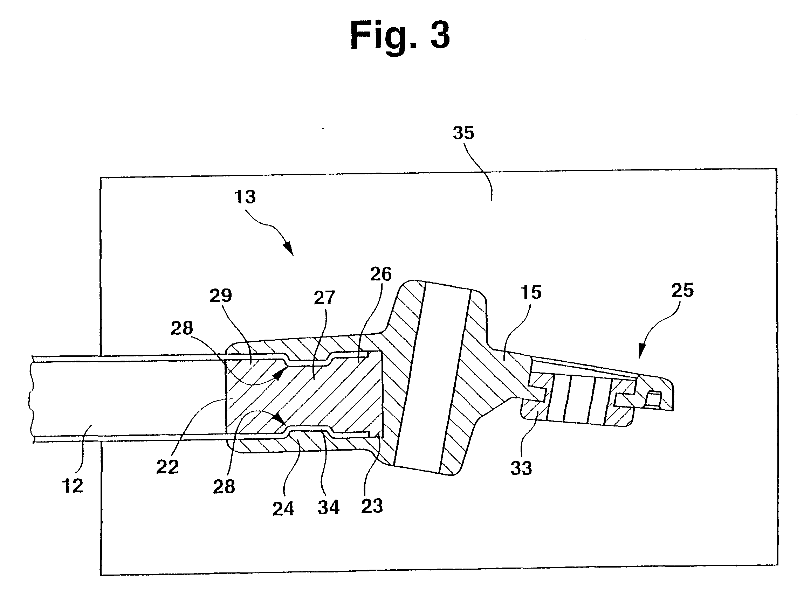

In Figur 3 ist eine vorteilhafte Variante der erfindungsgemäßen Verbindung zwischen dem Lager 15 und einem der freien Enden 13 des Platinenrohrs 12 zu erkennen. Dabei ist der Dichtstopfen 22 mit seinem Bund 23 bis an die Stirnfläche des Platinenrohrs 12 angelegt. Der Dichtstopfen 22 entspricht der in Figur 2 vorgestellten Ausführungsform. Im Unterschied zur in Figur 2 besprochenen Variante sind zwei gegenüberliegende Abschnitte 34 des Platinenrohrs 12 so verformt, daß der oder die Abschnitte 34 wenigstens teilweise auf der Oberfläche der Ausnehmungen 28 des Dichtstopfens anliegen. Wie bereits bei der in Figur 2 vorgestellten Variante ist auch hier das verschlossene Platinenrohr 12 vom angespritzten Lager 15 umgeben. Auch hier findet sich das bereits zu Figur 2 besprochene Lagerauge 25 mit dem Dämpfungselement 33 wieder.

In Abweichung zur in Figur 2 vorgestellten Variante ist hier auch ein Dichtstopfen 22 ohne Bund 23 denkbar. In diesem Fall muß der Dichtstopfen 22 vor dem Eindrücken der Platinenrohrwand so fest an der Innenkontur des Platinenrohrs 12 anliegen, daß ein unbeabsichtigtes Verrutschen verhindert wird.

Durch die in Figur 2 und Figur 3 vorgestellten Varianten der erfindungsgemäßen Verbindung zwischen Lager 15 und Platinenrohr 12, bzw. Rohrplatine 11 sind beide freie Enden 13 oder 14 und deren Dichtstopfen 22 so ausgebildet, daß sie mit dem aufgespritzten Lager 15 gegen ein Abziehen und/oder Verdrehen formschlüssig verbunden sind.

Das Platinenrohr 12 ist geeigneterweise aus Metall gefertigt und das Lager 15 sowie der Dichtstopfen 22 im wesentlichen aus Kunststoff. Für das Lager 15 und den Dichtstopfen 22 ist auch eine Metallausführung möglich, insbesondere gilt dies für den Dichtstopfen 22 im Hinblick auf die erforderliche Festigkeit und Steifigkeit aufgrund der Spritzdruckbelastung, da der Dichtstopfen 22 das Platinenrohr 12 von innen gegen den Spritzdruck abstützt. Für das Dämpfungselement 33 ist die Verwendung eines thermoplastischen, droplastischen oder elastomeren Kunststoffs möglich.

Das Verfahren zum Herstellen der erfindungsgemäßen kraftund/oder formschlüssigen Verbindung zwischen dem Lager 15 und dem Platinenrohr 12 läuft wie folgt ab. Zur Herstellung der in Figur 2 vorgestellten Variante ist zunächst das Platinenrohr 12 vor dem Verschließen durch den Dichtstopfen 22 am Umfang im Bereich des Dichtstopfens 22 an seinem mindestens einen freien Ende 13 oder 14 mindestens je einmal zu lochen. Daran anschließend ist das Platinenrohr 12 mit dem Dichtstopfen 22 zu schließen und anschließend mit diesem zusammen in eine Gußform 35 einzulegen. Anschließend wird die Gußform 35 geschlossen und das freie Ende 13 oder 14 des Platinenrohrs 12 durch die Spritzgußmasse umspritzt, so daß das Lager 15 mit dem Lagerauge 25 angeformt wird.

Zur Herstellung der Variante nach Figur 3 ist das ungelochte Platinenrohr 12 zunächst an seinem freien Ende 13 oder 14 durch den Dichtstopfen 22 zu schließen. Anschließend werden die Abschnitte 34 des Platinenrohrs 12 so verformt, daß diese wenigstens teilweise auf der Oberfläche der

Ausnehmungen 28 des Dichtstopfens 22 anliegen. Dieses geschlossene und verformte Ende des Platinenrohrs 12 wird nun ebenfalls in die Gußform 35 eingelegt und nach dem Schließen der Gußform 35 durch die Spritzgußmasse umspritzt und so das Lager 15 angeformt.

Als Spritzgußmasse ist bevorzugt ein thermoplastischer Kunststoff zu verwenden, der auch bei Temperaturen von über 100 Grad Celsius noch formstabil bleibt.

## Patentansprüche

1. Rohrplatine, insbesondere einer Scheibenwischanlage von Kraftfahrzeugen, mit einem Platinenrohr (12), das ein Hohlprofil aufweist, das wenigstens an einem seiner freien Enden ein Lager (15) aus spritzfähigem, sich verfestigendem Material zur Aufnahme einer Wischerwelle aufweist wobei das Lager (15) auf dem mindestens einen freien Ende (13) des Platinenrohrs (12) aufgespritzt ist, **dadurch gekennzeichnet, daß** das Platinenrohr (12) an seinem mindestens einen freien Ende (13) durch einen Dichtstopfen (22) geschlossen ist, und
daß der Dichtstopfen (22) einen Bund (23) aufweist, der das mindestens eine freie Ende (13) des Platinenrohrs (12) verschließt.

2. Rohrplatine nach Anspruch 1, **dadurch gekennzeichnet, daß** dem Bund (23) des Dichtstopfens (22) ein erster Abschnitt (26) folgt, der einer Innenkontur des Platinenrohrs (12) entspricht und an dieser dichtend anliegt.

3. Rohrplatine nach Anspruch 2, **dadurch gekennzeichnet, daß** dem ersten Abschnitt (26) ein zweiter Abschnitt (27) folgt, dessen Querschnittsfläche gegenüber der Querschnittsfläche des ersten Abschnitts (26) durch eine oder mehrere vom Umfang her ausgenommene Ausnehmungen (28) verkleinert ist.

4. Rohrplatine nach Anspruch 3, **dadurch gekennzeichnet, daß** dem zweiten Abschnitt (279) des Dichtstopfens (22) ein dritter Abschnitt (29) folgt, der der Innenkontur des Platinenrohrs (12) entspricht und an dieser dichtend anliegt.

5. Rohrplatine nach Anspruch 3 oder 4, **dadurch gekennzeichnet, daß** der zweite Abschnitt (27) eine Ringnut ist.

6. Rohrplatine nach Anspruch 1, **dadurch gekennzeichnet, daß** das Platinenrohr (12) am Umfang im Bereich des Dichtstopfens (22) an seinem mindestens einen freien Ende (13) mindestens ein Loch (20) aufweist.

7. Rohrplatine nach Anspruch 4 und 6 **dadurch gekennzeichnet, daß** das mindestens eine Loch (30) im Bereich des zweiten Abschnitts (27) des Dichtstopfens (22) eine kleinere lichte axiale Weite als die eine oder mehrere Ausnehmungen (28) hat und daß bei mit seinem Bund (23) am freien Ende (23) stirnseitig anliegendem Dichtstopfen (22) mindestens Teilbereiche mindestens eines Lochrands (31) über die Ausnehmungen (28) ragen und so Hinterschneidungen (32), zur Aufnahme eines Befestigungselements, vorzugsweise des Spritzmaterials des Lagers (15) bilden.

8. Rohrplatine nach Anspruch 4, **dadurch gekennzeichnet, daß** Abschnitte (34) des Platinenrohrs (12) so verformt sind, daß die Abschnitte (34) wenigstens teilweise auf der Oberfläche der Ausnehmungen (28) anliegen.

9. Rohrplatine nach einem der vorhergehenden Ansprüche, **dadurch gekennzeichnet, daß** der Dichtstopfen (22) mindestens so lang ist, daß der Dichtstopfen (22) mit seinem dritten Abschnitt (29) an einer gleichen axialen Position des Platinenrohrs (12) wie der Ansatz (24) des Lagers (15) endet.

10. Rohrplatine nach einem der vorhergehenden Ansprüche, **dadurch gekennzeichnet, daß** das Lager (15) ein Lagerauge (25) aufweist.

11. Rohrplatine nach Anspruch 10, **dadurch gekennzeichnet, daß** das Lagerauge (25) ein Dämpfungselement (33) aufnimmt.

12. Rohrplatine nach Anspruch 11, **dadurch gekennzeichnet, daß** das Dämpfungselement (33) in das Lagerauge (25) eingespritzt ist.

13. Rohrplatine nach einem der vorgenannten Ansprüche, **dadurch gekennzeichnet, daß** das mindestens eine freie Ende (13) und der Dichtstopfen (22) so ausgebildet sind, daß sie mit dem aufgespritzten Lager (15) gegen ein Abziehen und/oder Verdrehen formschlüssig verbunden sind.

14. Rohrplatine nach einem der vorgenannten Ansprüche, **dadurch gekennzeichnet, daß** das Platinenrohr (12) aus Metall und das Lager (15) sowie der Dichtstopfen (22) im wesentlichen aus Kunststoff besteht.

15. Verfahren zum Herstellen einer kraft- und/oder formschlüssigen Verbindung zwischen einem Lager (15), insbesondere zur Aufnahme einer Wischerwelle, und einem freien Ende (13) eines ein Hohlprofil aufweisenden Platinenrohrs (12) durch Aufspritzen einer sich verfestigenden Spritzgußmasse, **dadurch gekennzeichnet, daß** das mindestens eine freie Ende (13) des Platinenrohrs (12) durch einen Dichtstopfen (22) geschlossen wird, daß dieses anschließend in eine Gußform (35) eingelegt und nach dem Schließen der Gußform (35) durch die Spritzgußmasse umspritzt und so das Lager (15) geformt wird.

16. Verfahren nach Anspruch 15, **dadurch gekennzeichnet, daß** das Platinenrohr (12) vor dem Verschließen durch den Dichtstopfen (22) am Umfang im Bereich des Dichtstopfens (22) an seinem mindestens einen freien Ende (23) mindestens einmal gelocht wird.

17. Verfahren nach Anspruch 15, **dadurch gekennzeichnet, daß** vor dem Einlegen des mindestens einen, durch einen Dichtstopfen (22) geschlossen freien Endes (13) des Platinenrohrs (12) in die Gußform (35) Abschnitte (34) des Platinenrohrs (12) so verformt werden, daß die Abschnitte (34) wenigstens teilweise auf der Oberfläche von Ausnehmungen (28) des Dichtstopfens (22) anliegen.

## Claims

1. Tubular plate, in particular of a wiper system of motor vehicles, having a plate tube (12) which has a hollow profile having, at least at one of its free ends, a bearing (15) consisting of sprayable, solidifying material for holding a wiper shaft, the bearing (15) being sprayed onto the at least one free end (13) of the plate tube (12), **characterized in that** the plate tube (12) is closed at its at least one free end (13) by a sealing stopper (22), and **in that** the sealing stopper (22) has a collar (23) which closes the at least one free end (13) of the plate tube (12).

2. Tubular plate according to Claim 1, **characterized in that** the collar (23) of the sealing stopper (22) is followed by a first section (26) which corresponds to an inner contour of the plate tube (12) and bears against the said inner contour in a sealing manner.

3. Tubular plate according to Claim 2, **characterized in that** the first section (26) is followed by a second section (27), the cross-sectional surface of which is reduced in size in comparison to the cross-sectional surface of the first section (26) by one or more recesses (28) worked off from the circumference.

4. Tubular plate according to Claim 3, **characterized in that** the second section (27) of the sealing stopper (22) is followed by a third section (29) which corresponds to the inner contour of the plate tube (12) and bears against this inner contour in a sealing manner.

5. Tubular plate according to Claim 3 or 4, **characterized in that** the second section (27) is an annular groove.

6. Tubular plate according to Claim 1, **characterized in that** on the circumference in the region of the sealing stopper (22) the plate tube (12) has at least one hole (30) at its at least one free end (13).

7. Tubular plate according to Claim 4 and 6, **characterized in that** the at least one hole (30) in the region of the second section (27) of the sealing stopper (22) has a smaller clear axial width than the one or more recesses (28), and **in that** with the sealing stopper (22) bearing on the end side with its collar (23) against the free end (23), at least subregions of at least one hole edge (31) protrude over the recesses (28) and thus form undercuts (32) for receiving a fastening element, preferably the spray material of the bearing (15).

8. Tubular plate according to Claim 4, **characterized in that** sections (34) of the plate tube (12) are deformed in such a manner that the sections (34) bear at least partially on the surface of the recesses (28).

9. Tubular plate according to one of the preceding claims, **characterized in that** the sealing stopper (22) is of at least such a length that the sealing stopper (22) ends with its third section (29) at the same axial position of the plate tube (12) as the extension (24) of the bearing (15).

10. Tubular plate according to one of the preceding claims, **characterized in that** the bearing (15) has a bearing eye (25).

11. Tubular plate according to Claim 10, **characterized in that** the bearing eye (25) accommodates a damping element (33).

12. Tubular plate according to Claim 11, **characterized in that** the damping element (33) is injected into the bearing eye (25).

13. Tubular plate according to one of the preceding claims, **characterized in that** the at least one free end (13) and the sealing stopper (22) are designed in such a manner that they are connected to the sprayed-on (15) in a form-fitting manner to prevent being pulled off and/or twisted.

14. Tubular plate according to one of the preceding claims, **characterized in that** the plate tube (12) consists of metal and the bearing (15) and the sealing stopper (22) consist essentially of plastic.

15. Method for producing a frictional and/or form-fitting connection between a bearing (15), in particular for holding a wiper shaft, and a free end (13) of a plate tube (12), which has a hollow profile, by spraying-on a solidifying injection-moulding compound, **characterized in that** the at least one free end (13) of the plate tube (12) is closed by a sealing stopper (22), **in that** this is then placed into a casting mould (35) and, after the casting mould (35) has closed, is encapsulated by the injection-moulding compound and the bearing (15) is thus formed.

16. Method according to Claim 15, **characterized in that** the plate tube (12), before being closed by the sealing stopper (22), is perforated at least once on its at least one free end (23) on the circumference in the region of the sealing stopper (22).

17. Method according to Claim 15, **characterized in that** before the at least one free end (13) of the plate tube (12), which end is closed by a sealing stopper (22), is placed into the casting mould (35) sections (34) of the plate tube (12) are deformed in such a manner that the sections (34) bear at least partially on the surface of recesses (28) of the sealing stopper (22).

## Revendications

1. Platine tubulaire, en particulier d'un dispositif d'essuie-glace pour véhicules automobiles, munie d'un tube de platine (12) présentant un profil creux et au moins sur l'une de ses extrémités libres un palier (15) constitué d'un matériau pouvant être moulé par injection, capable de se solidifier, destiné à la réception d'un balai d'essuie-glace, le palier (15) étant injecté au moins sur l'extrémité libre (13) du tube de platine (12),
**caractérisée en ce que**
le tube de platine (12) est fermé au moins à son extrémité libre (13) par un bouchon étanche (22), et le bouchon étanche (22) comporte une bride (23) qui ferme au moins l'extrémité libre (13) du tube de platine (12).

2. Platine tubulaire selon la revendication 1,
**caractérisée en ce qu'**
un premier segment (26), correspondant à un contour intérieur du tube de platine (12) et placé hermétiquement sur ce dernier, fait suite à la bride (23) du bouchon étanche (22).

3. Platine tubulaire selon la revendication 2,
**caractérisée en ce qu'**
un second segment (27), dont la section transversale est diminuée par rapport à la section transversale du premier segment (26) par un ou plusieurs évidements (28) pratiqués depuis la périphérie, prolonge premier segment (26).

4. Platine tubulaire selon la revendication 3,
**caractérisée en ce qu'**
une troisième segment (29), correspondant au contour intérieur du tube de platine (12) et placé hermétiquement sur ce dernier, prolonge le second segment (27) du bouchon étanche (22).

5. Platine tubulaire selon la revendication 3 ou 4,
**caractérisée en ce que**
le second segment (27) est une rainure annulaire.

6. Platine tubulaire selon la revendication 1,
**caractérisée en ce que**
sur la périphérie dans la zone du bouchon étanche (22) le tube de platine (12) comporte au moins un trou (20) au moins sur son extrémité libre (13).

7. Platine tubulaire selon la revendication 4 et 6,
**caractérisée en ce qu'**
au moins un trou (30) dans la zone du second segment (27) du bouchon étanche (22) présente un diamètre axial intérieur plus petit que l'un ou la pluralité des évidements (28), et en présence du bouchon étanche (22) placé côté face sur l'extrémité libre (13) par l'intermédiaire de sa bride (23), au moins les parties d'au moins un bord perforé (31) font saillie au-dessus des évidements (28) et forment ainsi des contre-dépouilles (32) pour la réception d'un élément de fixation, de préférence, du matériau d'injection du palier (15).

8. Platine tubulaire selon la revendication 4,
**caractérisée en ce que**
des segments (34) du tube de platine (12) sont déformés pour venir (34) se placer au moins partiellement sur la surface des évidements (28).

9. Platine tubulaire selon l'une quelconque des revendications précédentes,
**caractérisée en ce que**
le bouchon étanche (22) est au moins passez long pour que son troisième segment (29) aboutisse sur une position axiale du tube de platine (12) identique à celle de l'épaulement (24) du palier (15).

10. Platine tubulaire selon l'une quelconque des revendications précédentes,
**caractérisée en ce que**
le palier (15) comporte un oeillet de palier (25).

11. Platine tubulaire selon la revendication 10,
**caractérisée en ce que**
l'oeillet de palier (25) reçoit un élément d'amortissement (33).

12. Platine tubulaire selon la revendication 11,
**caractérisée en ce que**
l'élément d'amortissement (33) est injecté dans l'oeillet de palier (25).

13. Platine tubulaire selon l'une quelconque des revendications précédentes,
**caractérisée en ce qu'**
au moins l'extrémité libre (13) et le bouchon étanche (22) sont formés pour être reliés par complémentarité de forme au palier injecté (15) de manière à être protégés contre un retrait et/ou une rotation.

14. Platine tubulaire selon l'une quelconque des revendications précédentes,
**caractérisée en ce que**
le tube de platine (12) est constitué de métal, et le palier (15) ainsi que le bouchon étanche (22) sont essentiellement constitués de matière plastique.

15. Procédé de fabrication d'une liaison entraînée par complémentarité de force et de forme entre un palier (15), en particulier pour la réception d'un balai d'essuie-glace, et d'une extrémité libre (13) d'un tube de platine (12) comportant un profil creux, par injection d'une matière à mouler se solidifiant,
**caractérisé en ce qu'**
au moins l'extrémité libre (13) du tube de platine (12) est fermée par un bouchon étanche (22), et celle-ci est ensuite insérée dans un moule de coulée (35) et enrobée d'une matière à mouler par injection après fermeture du moule (35), et le palier (15) est ainsi formé.

16. Procédé selon la revendication 15,
**caractérisé en ce qu'**
avant la fermeture par le bouchon étanche (22), le tube de platine (12) est perforé au moins une fois sur au moins l'extrémité libre (23) au niveau de la périphérie dans la zone du bouchon étanche (22).

17. Procédé selon la revendication 15,
**caractérisé en ce qu'**
avant l'insertion dans le moule de coulée au moins de l'extrémité libre (13) du tube de platine (12) fermée par un bouchon étanche (22), les segments (34) du tube de platine (12) sont déformés pour être placés au moins partiellement sur la surface des évidements (28) du bouchon étanche (22).
